# EUROPEAN PATENT SPECIFICATION

(11) **EP 3 730 854 B1**
(45) Date of publication and mention of the grant of the patent: **14.09.2022**
(21) Application number: 20170177.8
(22) Date of filing: 17.04.2020
(51) Int. Cl.: F24F 11/36, F24F 13/20, F24F 13/22, F24F 1/0007, F24F 110/65

(54) **INDOOR UNIT FOR AIR CONDITIONER**
INNENRAUMEINHEIT FÜR KLIMAANLAGE
UNITÉ D'INTÉRIEUR POUR CLIMATISEUR

(30) Priority: 26.04.2019 JP 2019086021
(43) Date of publication of application: 28.10.2020
(73) Proprietor: Toshiba Carrier Corporation, Kawasaki-Shi, Kanagawa 212-8585 (JP)
(72) Inventor: ANDO, Hiroaki, Shizuoka, 416-8521 (JP); HIUGANO, Kazuhiro, Shizuoka, 416-8521 (JP); HIRAOKA, Takashi, Shizuoka, 416-8521 (JP)
(74) Representative: Gramm, Lins & Partner Patent- und Rechtsanwälte PartGmbB

(56) References cited:
- WO-A1-2018/216052
- CN-A- 109 405 096
- JP-A- 2016 070 568
- JP-A- 2016 191 504

## Description

### FIELD

Embodiments described herein relate generally to an indoor unit for an air conditioner as it is for example known from JP 2016/070568 A.

### BACKGROUND

Traditionally, for the refrigerant of an air conditioner, R410A having a low ozone depletion potential (ODP) has been widely used. However, as the global warming potential (GWP) of R410A is high, in recent years, the refrigerant to be used has shifted to a refrigerant having a low GWP.

For a refrigerant having a low GWP, for example, R32 (CH₂F₂: difluoromethane) can be considered. Although R410A is incombustible, R32 is combustible. When such a combustible refrigerant is used, and the refrigerant is leaked from a conduit of an indoor unit, an ignition source may catch fire. Thus, a refrigerant leakage sensor for detecting the leaked refrigerant needs to be provided in the indoor unit.

For example, in a floorstanding indoor unit, a leaked refrigerant is retained on the lower side. Thus, a refrigerant leakage sensor is provided in a range from the bottom plate of a housing to a predetermined height. In general, an electronic component box in which the controller of the indoor unit is accommodated is provided above the range. Thus, it is necessary to provide the refrigerant leakage sensor in an accommodation box different from the electronic component box such that the sensor is protected from water drops and dust. Moreover, it is necessary to arrange lines for connecting the refrigerant leakage sensor and the controller in the housing and protect the lines and the components for securing the lines. In this case, the number of manufacturing steps of the indoor unit is increased. The manufacturing cost is also increased. Thus, various improvements should be made in the layout form of the electronic component box and the refrigerant leakage sensor in the housing. The invention provides an indoor unit according to claim 1.

### BRIEF DESCRIPTION OF THE DRAWINGS

FIG. 1 is a general perspective view of an indoor unit according to a first embodiment.
FIG. 2 is a general cross-sectional view of the indoor unit.
FIG. 3 is a general front view of the indoor unit.
FIG. 4 is a general exploded perspective view of an electronic component box provided in the indoor unit.
FIG. 5 is a general perspective view showing an example of the internal structure of the electronic component box.
FIG. 6 is a flowchart showing an example of an operation related to the detection of refrigerant leakage.
FIG. 7 is a general front view of an indoor unit according to a comparison example.
FIG. 8 is a general cross-sectional view of an indoor unit according to a second embodiment.

### DETAILED DESCRIPTION

In general, according to one embodiment, an indoor unit for an air conditioner comprises a housing, a heat exchanger, a drain pan, a blower and an electronic component box. The housing comprises a bottom plate facing an installation surface. The heat exchanger is accommodated in the housing. The drain pan receives dew condensation water generated in the heat exchanger. The blower generates an airflow passing through the heat exchanger. The electronic component box accommodates a controller for controlling the blower and a sensor for detecting leakage of a refrigerant passing through a channel including the heat exchanger. The electronic component box is provided so as to be closer to a bottom plate side than the drain pan.

Embodiments will be described with reference to the accompanying drawings.

### [First Embodiment]

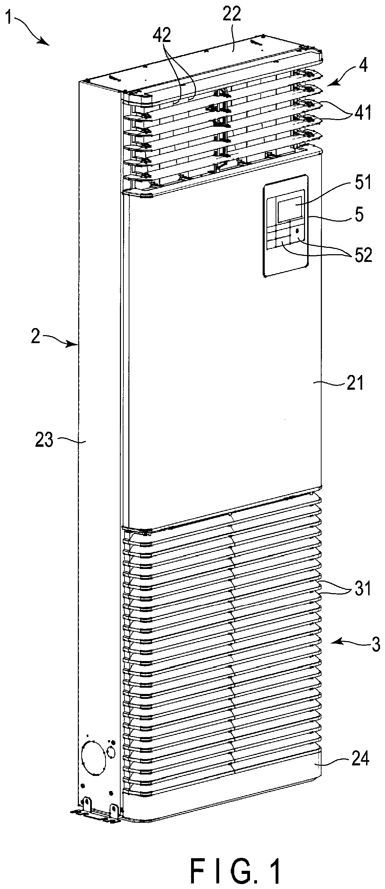

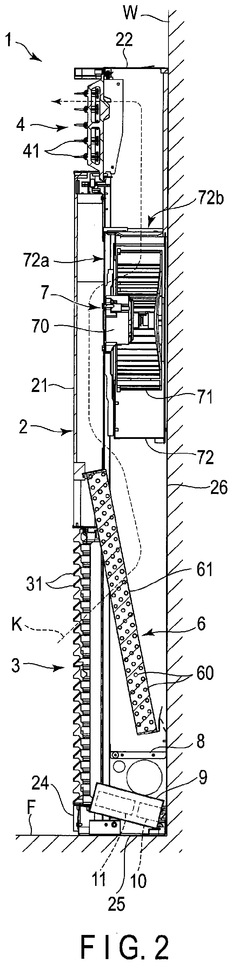

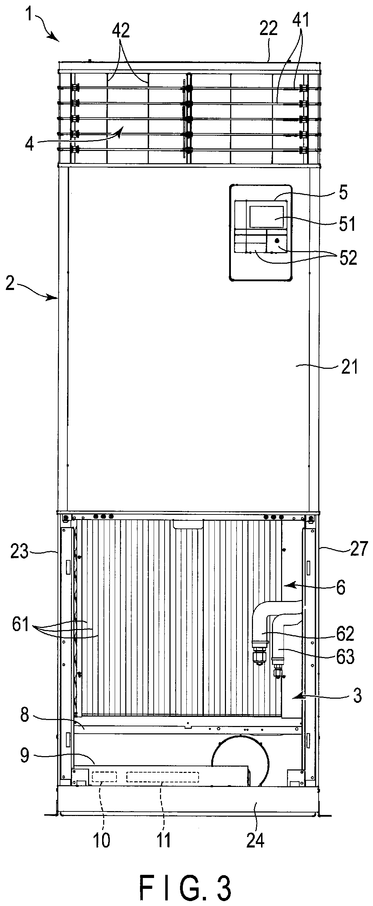

FIG. 1 is a general perspective view of an indoor unit 1 according to a first embodiment. FIG. 2 is a general cross-sectional view of the indoor unit 1 shown in FIG. 1. FIG. 3 is a general front view of the indoor unit 1 shown in FIG. 1.

For example, the indoor unit 1 is provided indoors and is connected to an outdoor unit provided outdoors via a refrigerant pipe. An air conditioner comprising a refrigerating cycle is structured by the indoor unit 1, the outdoor unit and the refrigerant pipe. The present embodiment assumes that a refrigerant of the refrigerating cycle is combustible. For the combustible refrigerant, for example, R32 may be used. However, the refrigerant to be used is not limited to this example.

The indoor unit 1 comprises a housing 2, an inlet 3, an outlet 4 and a control panel 5. As shown in FIG. 1, the housing 2 includes a front plate 21, an upper plate 22, a left-side plate 23 and a lower cover 24. The housing 2 further includes a bottom plate 25 and a rear plate 26 as shown in FIG. 2 and includes a right-side plate 27 as shown in FIG. 3. The type of the indoor unit 1 of the present embodiment is a floorstanding type provided such that the bottom plate 25 faces a floor F which is an example of an installation surface and such that the rear plate 26 faces a wall W as shown in FIG. 2.

The inlet 3 is provided in the lower part of the front surface of the housing 2. A plurality of horizontal blades 31 are provided in the inlet 3. The outlet 4 is provided in the upper part of the front surface of the housing 2. In the outlet 4, a plurality of horizontal blades 41 for adjusting the direction of a perpendicular airflow and a plurality of perpendicular blades 42 for adjusting the direction of a horizontal airflow are provided. FIG. 3 shows a state where the horizontal blades 31 of the inlet 3 are removed.

The front plate 21 is provided between the inlet 3 and the outlet 4. The control panel 5 is provided in the upper right part of the front plate 21. The control panel 5 includes a display 51 for displaying various types of information including the present temperature of refrigerated air conditioning or heating, and a plurality of buttons 52 operated by a user.

As shown in FIG. 2, the indoor unit 1 comprises a heat exchanger 6, a blower 7, a drain pan 8, an electronic component box 9 and a refrigerant leakage sensor 10 inside the housing 2. The heat exchanger 6 comprises a plurality of heat-transfer pipes 60, and a plurality of fins 61 connected to the heat-transfer pipes 60. The heat-transfer pipes 60 extend in a horizontal direction from the left-side plate 23 to the right-side plate 27. The fins 61 are arranged in this horizontal direction.

As shown in FIG. 3, refrigerant pipes 62 and 63 are provided in the right-side plate 27. For example, the inlet of a channel structured by each heat-transfer pipe 60 is connected to the refrigerant pipe 62. The outlet of the channel is connected to the refrigerant pipe 63. The refrigerant pipes 62 and 63 are connected to the outdoor unit via a refrigerant pipe provided outside the indoor unit 1.

In the example of FIG. 2, a large part of the heat exchanger 6 faces the inlet 3. Further, the heat exchanger 6 is inclined such that the upper end is close to the front plate 21 and the lower end is close to the rear plate 26. When air passes between the fins 61, heat exchange is performed between the air and the refrigerant flowing through each heat-transfer pipe 60. The heat exchanger 6 functions as an evaporator at the time of cooling operation, and functions as a condenser at the time of heating operation.

The blower 7 comprises a motor 70, a sirocco fan 71 and a fan case 72. In the example of FIG. 2, the rotation axis of the motor 70 is parallel to the depth direction of the indoor unit 1 (in other words, a direction from the front plate 21 to the rear plate 26). The sirocco fan 71 comprises a plurality of blades arranged in a circumferential direction around the rotation axis. The fan case 72 comprises a suction port 72a around the motor 70 and an exhaust port 72b facing the upper plate 22, and accommodates the sirocco fan 71. When the motor 70 rotates the sirocco fan 71, air flows along a channel K passing through the inlet 3, the heat exchanger 6, the fan case 72 and the outlet 4.

As shown in FIG. 2, the drain pan 8 is provided between the lower end of the heat exchanger 6 and the bottom plate 25. As shown in FIG. 3, the drain pan 8 is provided so as to connect the left-side plate 23 and the right-side plate 27. The dew condensation water generated in the heat exchanger 6 is received by the drain pan 8. The dew condensation water is discharged to the outside of the housing 2 through a pipe (not shown).

The electronic component box 9 is provided so as to be closer to the bottom plate 25 side than the drain pan 8. In the example of FIG. 2, a large part of the electronic component box 9 is located between the drain pan 8 and the bottom plate 25. In the example of FIG. 3, the electronic component box 9 is provided so as to be close to the left-side plate 23. A space is defined between the electronic component box 9 and the right-side plate 27. In another respect, the electronic component box 9 is not located immediately under the refrigerant pipe 62 or 63.

A controller 11 which controls the components of the indoor unit 1, such as the control panel 5 and the blower 7, is accommodated in the electronic component box 9. The electronic component box 9 partially faces the inlet 3. By this structure, the air taken from the inlet 3 cools the inside and outside of the electronic component box 9, thereby accelerating the heat release of the controller 11.

The refrigerant leakage sensor 10 detects a refrigerant leaked inside the housing 2. As the leaked refrigerant is heavier than air, it is retained in the lower part of the housing 2. Therefore, the refrigerant leakage sensor 10 should be provided in the lower part of the housing 2, for example, within 30 cm in height from the floor F. In the present embodiment, the electronic component box 9 is provided within 30 cm in height from the floor F, and further, the refrigerant leakage sensor 10 is accommodated in the electronic component box 9. For the refrigerant sensor 10, for example, a semiconductor gas sensor may be used. However, the sensor to be used is not limited to this example.

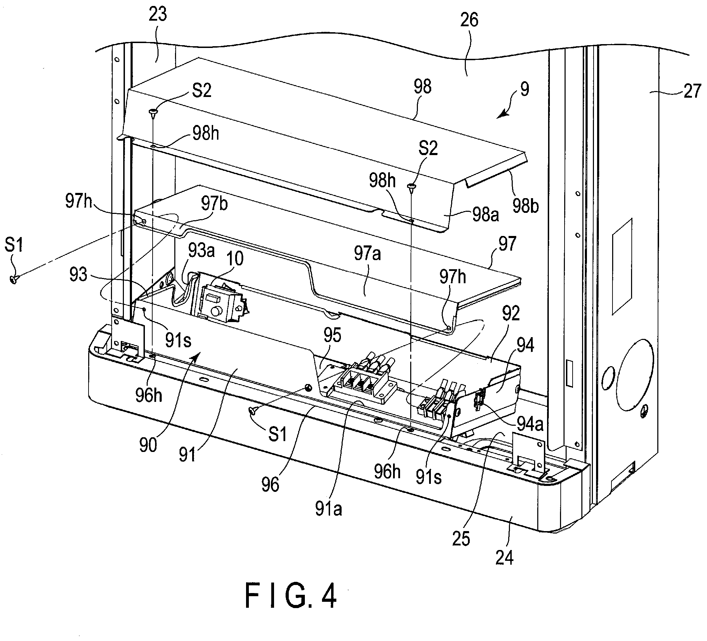

FIG. 4 is a general exploded perspective view of the electronic component box 9. The electronic component box 9 comprises a box body 90 for attaching various types of electronic components. The box body 90 comprises a first wall portion 91 facing the inlet 3, a second wall portion 92 facing the rear plate 26, a third wall portion 93 facing the left-side plate 23, a fourth wall portion 94 facing the right-side plate 27, and a bottom portion 95 facing the bottom plate 25. The wall portions 91 to 94 are examples of the side portions of the electronic component box 9.

For example, the bottom portion 95 is rectangular. The first wall portion 91 and the second wall portion 92 are provided upright from the long sides of the bottom portion 95. The third wall portion 93 and the fourth wall portion 94 are provided upright from the short sides of the bottom portion 95. The first wall portion 91 and the third wall portion 93 comprise a first recess portion 91a and a second recess portion 93a, respectively, through which lines extending from the electronic components accommodated in the electronic component box 9 to the outside of the electronic component box 9 pass. The fourth wall portion 94 comprises an insertion hole 94a through which similar lines pass.

The electronic component box 9 further comprises a bracket 96, a first cover 97 and a second cover 98. The bracket 96 is attached to, for example, the outer surface of the bottom portion 95. The distal end bent in an L-shape is hooked on the lower cover 24 of the housing 2.

The first cover 97 faces the bottom portion 95 and blocks the upper parts of the wall portions 91 to 94. The first cover 97 comprises a first protrusion portion 97a and a second protrusion portion 97b protruding downward from the front edge (the edge on the first wall portion 91 side) in the figure. In a state where the first cover 97 is attached to the box body 90, a gap through which various types of lines pass is provided between the distal end of the first protrusion portion 97a and the base of the first recess portion 91a.

A hole 97h is provided in each of the first protrusion portion 97a and the second protrusion portion 97b. In the first wall portion 91, a female screw 91s is provided at a position corresponding to each hole 97h. When a pair of male screws S1 is screwed into the female screws 91s through the holes 97h, the first cover 97 is secured to the box body 90.

The first cover 97 is covered with the second cover 98. The second cover 98 comprises a first eave portion 98a protruding downward from the front edge (the edge on the first wall portion 91 side) in the figure, and a second eave portion 98b protruding downward from the right edge (the edge on the fourth wall portion 94 side) in the figure. Although not shown in FIG. 4, the second cover 98 further comprises eave portions protruding downward from the rear edge (the edge on the second wall portion 92 side) in the figure and the left edge (the edge on the third wall portion 93 side) in the figure. The first eave portion 98a, the second eave portion 98b and the other eave portions cover the connection portions of the box body 90 and the first cover 97.

In the first eave portion 98a, a pair of holes 98h is provided. In the bracket 96, a hole 96h is provided at a position corresponding to each hole 98h. On the upper surface of the lower cover 24 on which the bracket 96 is hooked, a female screw is provided at a position corresponding to each hole 96h. When a pair of male screws S2 is screwed into the female screws of the lower cover 24 through the holes 98h and 96h, the box body 90 and the second cover 98 are secured to the lower cover 24.

In the structure in which the upper part of the box body 90 is doubly blocked by the first cover 97 and the second cover 98, the water falling from the heat exchanger 6 and the drain pan 8 or dust hardly enters the inside of the electronic component box 9. In particular, when water falls on the second cover 98, the water flows along the eave portions. Thus, the water hardly reaches the connection portion of the box body 90 and the first cover 97.

As shown in FIG. 2 and FIG. 4, the electronic component box 9 is inclined such that the second wall portion 92 is closer to the bottom plate 25 than the first wall portion 91. Thus, most of the water which fell on the second cover 98 flows to the second wall portion 92 side on which the recess portions or holes through which lines pass are not provided. This inclined structure can prevent the intrusion of water into the inside of the electronic component box 9 along the lines.

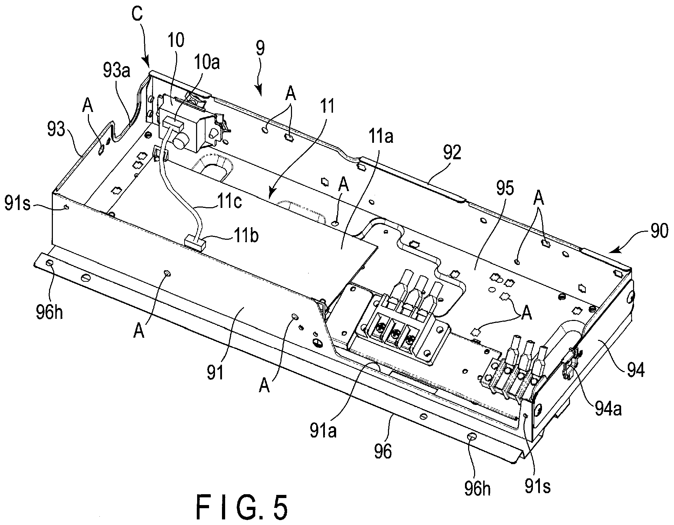

FIG. 5 is a general perspective view showing an example of the internal structure of the electronic component box 9. As described above, the electronic component box 9 accommodates the refrigerant leakage sensor 10 and the controller 11. The refrigerant leakage sensor 10 is attached to the inner surface of the second wall portion 92 near a corner portion C structured by the second wall portion 92 and the third wall portion 93. The above second recess portion 93a is also provided near the corner portion C. The refrigerant leakage sensor 10 comprises a first connector 10a for inputting and outputting a signal.

The controller 11 comprises a substrate 11a attached to the first wall portion 91. On the upper surface of the substrate 11a, a second connector 11b is provided. The first connector 10a and the second connector 11b are connected to each other via a line 11c. The controller 11 comprises various electronic components such as a processor and memory mounted on the substrate 11a. However, these components are omitted in FIG. 5.

In the first wall portion 91, the second wall portion 92, the third wall portion 93 and the bottom portion 95, a plurality of openings A are provided. In the example of FIG. 5, each opening A is a circular or polygonal hole. However, each opening A may have another shape such as a slit-like shape. The fourth wall portion 94 does not comprise an opening leading to the inside of the electronic component box 9 except for the insertion hole 94a described above. Neither the first cover 97 nor the second cover 98 shown in FIG. 4 comprises an opening leading to the inside of the electronic component box 9.

The bracket 96 is coupled to the outer surface of the bottom portion 95 in the lower part of the box body 90. The bracket 96 may have a size entirely covering the outer surface of the bottom portion 95. In this case, a gap may be provided between the bottom portion 95 and the bracket 96 so as not to block the opening of the bottom portion 95. In a portion facing the bottom portion 95 in the bracket 96, an opening may be provided.

In general, the specific gravity of a refrigerant is greater than that of air. Thus, for example, when a refrigerant is leaked from the connection portion between the refrigerant pipes 62 and 63 and the heat exchanger 6 shown in FIG. 3, the connection portions of the heat-transfer pipes 60 included in the heat exchanger 6, etc., the refrigerant is retained in the lower part of the housing 2, in other words, around the electronic component box 9. The retained refrigerant partially enters the inside of the electronic component box 9 via the gap between the first recess portion 91a and the first protrusion portion 97a, the second recess portion 93a, the insertion hole 94a and each opening A, and is detected by the refrigerant leakage sensor 10.

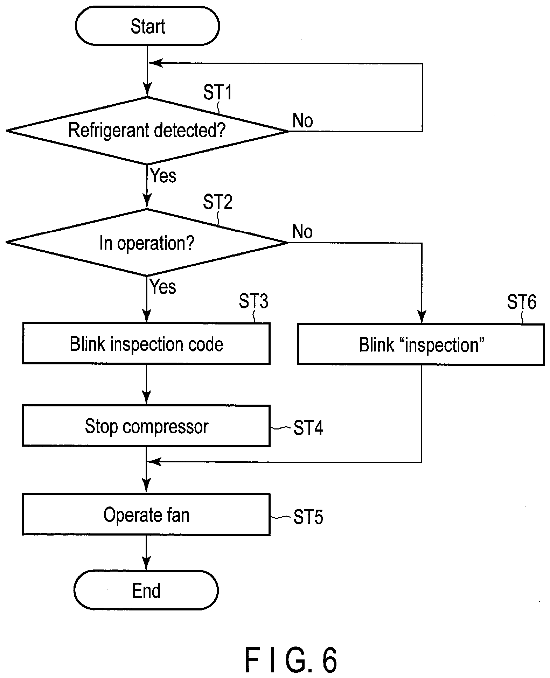

FIG. 6 is a flowchart showing an example of an operation related to the detection of refrigerant leakage. The operation shown in the flowchart is performed by the controller 11.

The controller 11 monitors refrigerant leakage based on the signal output via the line 11c from the refrigerant leakage sensor 10 (step ST1). When refrigerant leakage is detected (Yes in step ST1), the controller 11 determines whether or not the air conditioner is in operation (step ST2).

When the air conditioner is in operation (Yes in step ST2), the controller 11 causes the display 51 to blink the inspection code of refrigerant leakage (step ST3). Further, the controller 11 stops a compressor provided in the outdoor unit (step ST4). In this way, the circulation of the refrigerant is stopped, thereby preventing further leakage of the refrigerant.

Subsequently, the controller 11 drives the motor 70 and rotates the sirocco fan 71 (step ST5). The rotation of the sirocco fan 71 is continued for a predetermined time. In this way, the refrigerant retained inside the housing 2 is discharged to the outside and is diffused to the extent that no fire occurs.

When the air conditioner is not in operation (No in step ST2), the controller 11 causes the display 51 to blink, for example, the characters of "inspection" (step ST6). Subsequently, the controller 11 continuously rotates the sirocco fan 71 for a predetermined time (step ST5).

After step ST5, a series of operations is completed. However, the flash display of the inspection code or the characters of "inspection" on the display 51 is continued afterward.

In the above operation, for example, when the control panel 5 is operated while step ST5 is performed through steps ST3 and ST4 which are performed during operation, and the operation of the air conditioner is stopped, the display 51 may be switched from the inspection code to the characters of "inspection". In the opposite manner, when the control panel 5 is operated while step ST5 is performed through step ST6 which is performed during a shutdown, and the air conditioner transitions to a state in operation, the display 51 may be switched from the characters of "inspection" to the inspection code.

When the concentration of the refrigerant detected in step ST1 is low (for example, less than 10000 ppm), and a power reset is input by the operation of the control panel 5, the refrigerant detection by the refrigerant leakage sensor 10 may be reset. In the opposite manner, when the concentration of the detected refrigerant is high (for example, 10000 ppm or greater), even if a power reset is input, the refrigerant detection by the refrigerant leakage sensor 10 may not be reset.

Now, this specification explains effects obtained by the indoor unit 1 according to the present embodiment.

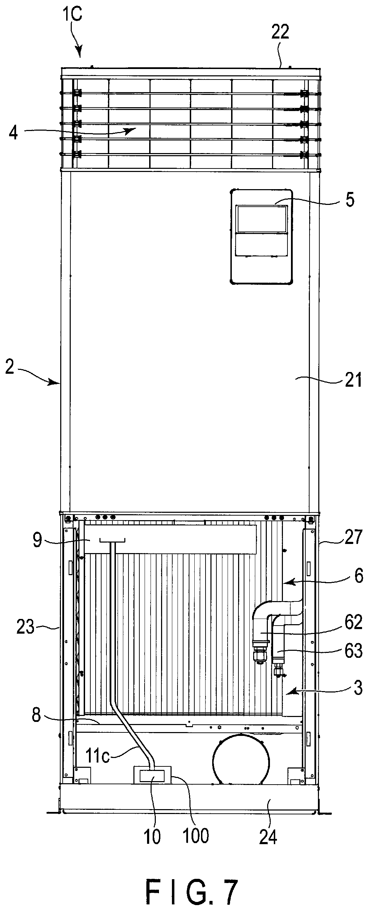

FIG. 7 is a general front view of an indoor unit 1C according to a comparison example to the present embodiment. In the indoor unit 1C, an electronic component box 9 is provided above a drain pan 8 and refrigerant pipes 62 and 63.

Since a refrigerant leakage sensor 10 needs to be provided in an area where a leaked refrigerant may be retained, the refrigerant leakage sensor 10 is provided under the drain pan 8. The refrigerant leakage sensor 10 is accommodated in a sensor box 100 for protecting the refrigerant leakage sensor 10 from the dew condensation water generated in a heat exchanger 6. The electronic component box 9 and the refrigerant leakage sensor 10 are connected to each other by a line 11c.

In this indoor unit 1C, the sensor box 100 and a component for securing the sensor box 100 to the inside of the housing 2 are needed. Moreover, since the electronic component box 9 is provided away from the refrigerant leakage sensor 10, the long line 11c is needed. A component for securing the line 11c to the inside of the housing 2 and a structure for the protection from water are also needed. For these reasons, the number of components and the number of assembling steps of the indoor unit 1 are increased, thereby increasing the manufacturing cost of the indoor unit 1.

In the indoor unit 1 of the present embodiment, the electronic component box 9 is provided under the drain pan 8, and further, the refrigerant leakage sensor 10 is accommodated in the electronic component box 9. Thus, the sensor box 100 is unnecessary. Further, the line 11c for connecting the refrigerant leakage sensor 10 and the controller 11 is allowed to be short. In addition, for example, a component for securing the sensor box 100 or the line 11c is unnecessary. Thus, the assembling of the indoor unit 1 is easy, and the manufacturing cost can be reduced.

As shown in FIG. 5, in the side portions (the wall portions 91 to 94) of the electronic component box 9 and the bottom portion 95, the openings A leading to the inside of the electronic component box 9 and passages through which lines pass are provided. In this structure, a leaked refrigerant easily enters the inside of the electronic component box 9. Thus, the detection accuracy of the refrigerant leakage sensor 10 can be increased.

An opening leading to the inside of the electronic component box 9 is not provided in the first cover 97 or the second cover 98. Thus, it is possible to prevent the water falling from the heat exchanger 6 and the drain pan 8 and dust from entering the inside of the electronic component box 9. As a result, electronic components such as the controller 11 and the refrigerant leakage sensor 10 accommodated in the electronic component box 9 can be protected from water. Moreover, it is possible to prevent the refrigerant leakage sensor 10 from erroneously detecting a refrigerant because of dust and prevent the degradation in the detection accuracy.

As shown in FIG. 2 and FIG. 4, the electronic component box 9 is inclined such that the second wall portion 92 is closer to the bottom plate 25 than the first wall portion 91. Further, the refrigerant leakage sensor 10 is attached to the second wall portion 92. As a leaked refrigerant is retained in the lower part, refrigerant leakage can be more promptly and accurately detected by attaching the refrigerant leakage sensor 10 to the second wall portion 92 close to the bottom plate 25.

The refrigerant leakage sensor 10 is provided near the corner portion C structured by the second wall portion 92 and the third wall portion 93. Near the corner portion C, the second recess portion 93a through which lines pass is also provided. When a leaked refrigerant enters the inside of the electronic component box 9 through the second recess portion 93a, refrigerant leakage can be promptly and accurately detected by the refrigerant leakage sensor 10.

For example, when a refrigerant is slightly leaked from the refrigerant pipes 62 and 63 at the time of the installation of the indoor unit 1, the refrigerant is easily retained in the lower part of the right-side plate 27. At the time of this operation, a refrigerant leakage inspection is performed. Thus, a detection in the refrigerant leakage sensor 10 is unnecessary. When the type of the refrigerant leakage sensor 10 is a semiconductor type, once refrigerant leakage is detected, the sensor itself should be replaced in some cases. In the present embodiment, as shown in FIG. 3 and FIG. 4, the refrigerant leakage sensor 10 is provided at a position closer to the left-side plate 23 (second side plate) facing the right-side plate 27 (first side plate) than the right-side plate 27 on which the refrigerant pipes 62 and 63 are provided. In this case, a refrigerant slightly leaked at the time of the above operation is not susceptibly detected by the refrigerant leakage sensor 10. This structure may contribute to a smooth operation.

Other than the above examples, various preferred effects can be obtained by improving the layout form of the electronic component box 9 and the refrigerant leakage sensor 10 inside the housing 2 and devising the structure of the electronic component box 9 as shown in the present embodiment.

### [Second Embodiment]

A second embodiment is explained. The elements identical or similar to those of the first embodiment are denoted by the same reference numbers, overlapping explanations being omitted.

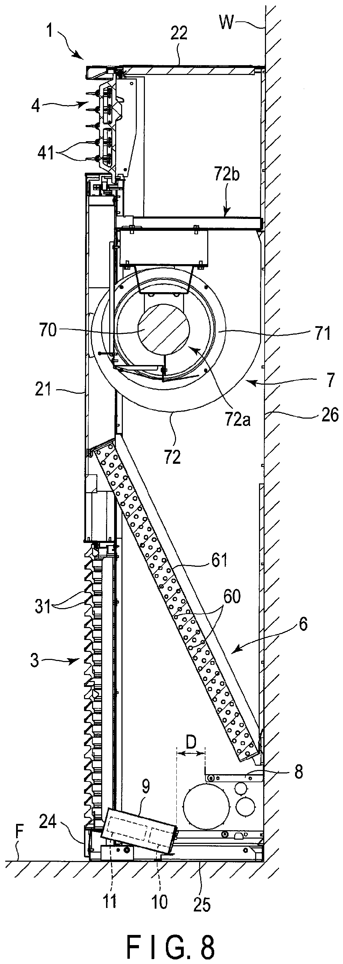

FIG. 8 is a general cross-sectional view of an indoor unit 1 according to the present embodiment. In the present embodiment, the depth (the distance between a front plate 21 and a rear plate 26) of the indoor unit 1 is greater than that of the example shown in FIG. 2. Further, the rotation axis of a sirocco fan 71 is parallel to the lateral direction of the indoor unit 1 (a direction from a left-side plate 23 to a right-side plate 27). A plurality of sirocco fans 71 may be provided in the lateral direction.

An electronic component box 9 is provided so as to be closer to the bottom plate 25 side than a drain pan 8 in a manner similar to that of the example of FIG. 2. It should be noted that, in the example of FIG. 8, the electronic component box 9 is not located between the drain pan 8 and the bottom plate 25. In the depth direction, distance D is provided between the electronic component box 9 and the drain pan 8.

In this structure, the water drop from the lower part of a heat exchanger 6 and the drain pan 8 hardly falls on the electronic component box 9. Thus, the waterproof property of the electronic component box 9 can be further improved. In addition to the above effect, effects similar to those of the first embodiment can be obtained from the present embodiment.

While certain embodiments have been described, these embodiments have been presented by way of example only, and are not intended to limit the scope of the invention, which is defined in the claims.

The layout form of the electronic component box 9 inside the housing 2 or the layout form of the refrigerant leakage sensor 10 inside the electronic component box 9 is not limited to the disclosures of the embodiments. For example, the electronic component box 9 may not be inclined. The refrigerant leakage sensor 10 may be attached to the first wall portion 91, the third wall portion 93, the fourth wall portion 94 or the bottom portion 95 of the electronic component box 9.

The openings A may be provided in one of the first wall portion 91, the second wall portion 92, the third wall portion 93 and the fourth wall portion 94, and may not be provided in the bottom portion 95. The openings A may be provided in the bottom portion 95, and may not be provided in the first wall portion 91, the second wall portion 92, the third wall portion 93 or the fourth wall portion 94.

## Claims

1. An indoor unit (1) for an air conditioner,
said indoor unit (1) comprising:
a housing (2) comprising a bottom plate (25) facing an installation surface;
a heat exchanger (6) accommodated in the housing (2) ;
a drain pan (8) which receives dew condensation water generated in the heat exchanger (6);
a blower (7) which generates an airflow passing through the heat exchanger (6); and
an electronic component box (9) which accommodates a controller (11),
**characterized in that**
the controller (11) is for controlling the blower (7) and the electronic component box(9) accomodates a sensor (10) for detecting leakage of a refrigerant passing through a channel (K) including the heat exchanger (6), the electronic component box (9) being provided so as to be closer to a bottom plate (25) side than the drain pan (8).

2. The indoor unit (1) of claim 1, **characterized in that**
the electronic component box (9) comprises a bottom portion (95) facing the bottom plate (25), and side portions (91, 92, 93, 94) provided upright from a peripheral edge of the bottom portion (95), and
at least one of the bottom portion (95) and the side portions (91, 92, 93, 94) comprises an opening (A) leading to inside of the electronic component box (9).

3. The indoor unit (1) of claim 2, **characterized in that**
the electronic component box (9) further comprises a cover (97) facing the bottom portion (95), and
the cover (97) does not comprise an opening leading to the inside of the electronic component box. (9) .

4. The indoor unit (1) of claim 2 or 3, **characterized by** further comprising
an inlet (3) provided in the housing (2) and facing the electronic component box (9), **characterized in that**
the side portions (91, 92, 93, 94) include a first wall portion (91) on an inlet (3) side, and a second wall portion (92) on a side opposite to the first wall portion (91), and
the electronic component box (9) is inclined such that the second wall portion (92) is closer to the bottom plate (25) than the first wall portion (91).

5. The indoor unit (1) of claim 4, **characterized in that**
the sensor (10) is attached to an inner surface of the second wall portion (92).

6. The indoor unit (1) of one of claims 1 to 5, **characterized in that**
the housing (2) comprises a first side plate (27) on which a refrigerant pipe (62, 63) connected to the heat exchanger (6) is provided, and a second side plate (23) facing the first side plate (27), and
the sensor (10) is provided at a position closer to the second side plate (23) than the first side plate (27) inside the electronic component box (9).

## Patentansprüche

1. Inneneinheit (1) für eine Klimaanlage,
die Inneneinheit (1) weist auf:
ein Gehäuse (2) mit einer Bodenplatte (25), die einer Installationsfläche zugewandt ist;
einen Wärmetauscher (6), der in dem Gehäuse (2) untergebracht ist;
eine Ablaufwanne (8), die das im Wärmetauscher (6) erzeugte Kondenswasser aufnimmt;
ein Gebläse (7), das einen durch den Wärmetauscher (6) strömenden Luftstrom erzeugt; und
ein Gehäuse (9) für elektronischen Komponenten, das eine Steuerung (11) aufnimmt, **dadurch gekennzeichnet, dass**
die Steuerung (11) zum Steuern des Gebläses (7) ist und das Gehäuse (9) für die elektronischen Komponenten einen Sensor (10) zum Erfassen einer Leckage eines Kältemittels aufnimmt, das durch einen den Wärmetauscher (6) enthaltenden Kanal (K) strömt, wobei das Gehäuse (9) für die elektronischen Komponenten so vorgesehen ist, dass es sich näher an einer Seite der Bodenplatte (25) befindet als die Ablaufwanne (8).

2. Inneneinheit (1) nach Anspruch 1, **dadurch gekennzeichnet, dass**
das Gehäuse (9) für die elektronischen Komponenten einen Bodenabschnitt (95), der der Bodenplatte (25) zugewandt ist, und Seitenabschnitte (91, 92, 93, 94) aufweist, die von einer Umfangskante des Bodenabschnitts (95) aus aufrecht stehen, und mindestens einer von dem Bodenabschnitt (95) und den Seitenabschnitten (91, 92, 93, 94) eine Öffnung (A) aufweist, die in das Innere des Gehäuses (9) für elektronische Komponenten führt.

3. Inneneinheit (1) nach Anspruch 2, **dadurch gekennzeichnet, dass** das Gehäuse (9) für elektronische Komponenten ferner eine Abdeckung (97) aufweist, die dem Bodenabschnitt (95) zugewandt ist, und die Abdeckung (97) keine Öffnung aufweist, die in das Innere des Gehäuse (9) für die elektronischen Komponenten führt.

4. Inneneinheit (1) nach Anspruch 2 oder 3, mit einem Einlass (3), der in dem Gehäuse (2) vorgesehen ist und dem Gehäuse für elektronische Komponenten (9) gegenüberliegt, **dadurch gekennzeichnet, dass**
die Seitenabschnitte (91, 92, 93, 94) einen ersten Wandabschnitt (91) auf einer Seite des Einlasses (3) und einen zweiten Wandabschnitt (92) auf einer dem ersten Wandabschnitt (91) gegenüberliegenden Seite umfassen, und
das Gehäuse (9) für elektronische Komponenten so geneigt ist, dass der zweite Wandabschnitt (92) näher an der Bodenplatte (25) liegt als der erste Wandabschnitt (91).

5. Inneneinheit (1) nach Anspruch 4, **dadurch gekennzeichnet, dass** der Sensor (10) an einer Innenfläche des zweiten Wandabschnitts (92) angebracht ist.

6. Inneneinheit (1) nach einem der Ansprüche 1 bis 5, **dadurch gekennzeichnet, dass**
das Gehäuse (2) eine erste Seitenplatte (27), an der eine mit dem Wärmetauscher (6) verbundene Kältemittelleitung (62, 63) vorgesehen ist, und eine der ersten Seitenplatte (27) zugewandte zweite Seitenplatte (23) aufweist, und
der Sensor (10) an einer Position vorgesehen ist, die näher an der zweiten Seitenplatte (23) als an der ersten Seitenplatte (27) innerhalb des Gehäuses (9) für elektronische Komponenten liegt.

## Revendications

1. Unité d'intérieur (1) pour un climatiseur, ladite unité d'intérieur (1) comprenant :
un boîtier (2) comprenant une plaque inférieure (25) faisant face à une surface d'installation ;
un échangeur de chaleur (6) logé dans le boîtier (2) ;
un bac de récupération (8) qui reçoit l'eau de condensation générée dans l'échangeur de chaleur (6) ;
un ventilateur (7) qui génère un écoulement d'air passant par l'échangeur de chaleur (6) ; et
une boîte de composants électroniques (9) qui loge un organe de commande (11),
**caractérisée en ce que** :
l'organe de commande (11) est prévu pour commander le ventilateur (7) et la boîte de composants électroniques (9) loge un capteur (10) pour détecter la fuite d'un réfrigérant passant par un canal (K) comprenant l'échangeur de chaleur (6), la boîte de composants électroniques (9) étant prévue afin d'être plus près d'un côté de plaque inférieure (25) que le bac de récupération (8).

2. Unité d'intérieur (1) selon la revendication 1, **caractérisée en ce que** :
la boîte de composants électroniques (9) comprend une partie inférieure (95) faisant face à la plaque inférieure (25), et des parties latérales (91, 92, 93, 94) disposées verticalement à partir d'un bord périphérique de la partie inférieure (95), et
au moins l'une parmi la partie inférieure (95) et les parties latérales (91, 92, 93, 94) comprend une ouverture (A) menant à l'intérieur de la boîte de composants électroniques (9).

3. Unité d'intérieur (1) selon la revendication 2, **caractérisée en ce que** :
la boîte de composants électroniques (9) comprend en outre un couvercle (97) faisant face à la partie inférieure (95), et
le couvercle (97) ne comprend pas d'ouverture menant à l'intérieur de la boîte de composants électroniques (9).

4. Unité d'intérieur (1) selon la revendication 2 ou 3, **caractérisée en ce qu'**elle comprend en outre :
une entrée (3) prévue dans le boîtier (2) et faisant face à la boîte de composants électroniques (9), **caractérisée en ce que** :
les parties latérales (91, 92, 93, 94) comprennent une première partie de paroi (91) sur un côté d'entrée (3), et une seconde partie de paroi (92) sur un côté opposé à la première partie de paroi (91), et
la boîte de composants électroniques (9) est inclinée de sorte que la seconde partie de paroi (92) est plus près de la plaque inférieure (25) que la première partie de paroi (91).

5. Unité d'intérieur (1) selon la revendication 4, **caractérisée en ce que** :
le capteur (10) est fixé sur une surface interne de la seconde partie de paroi (92).

6. Unité d'intérieur (1) selon l'une des revendications 1 à 5, **caractérisée en ce que** :
le boîtier (2) comprend une première plaque latérale (27) sur laquelle est prévu un tuyau de réfrigérant (62, 63) raccordé à l'échangeur de chaleur (6), et une seconde plaque latérale (23) faisant face à la première plaque latérale (27), et
le capteur (10) est prévu dans une position plus près de la seconde plaque latérale (23) que la première plaque latérale (27) à l'intérieur de la boîte de composants électroniques (9).
